(19) Europäisches Patentamt
European Patent Office
Office européen des brevets

(11) EP 1 479 430 A1

(12) **EUROPEAN PATENT APPLICATION**

(43) Date of publication:
**24.11.2004 Bulletin 2004/48**

(51) Int Cl.7: **B01D 53/94**, F01N 3/20

(21) Application number: **04011989.3**

(22) Date of filing: **19.05.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **20.05.2003 JP 2003142397**

(71) Applicant: **TOYOTA JIDOSHA KABUSHIKI KAISHA**
**Toyota-shi, Aichi-ken 471-8571 (JP)**

(72) Inventor: **Yamato, Masanori**
**Toyota-shi Aichi-ken, 471-8571 (JP)**

(74) Representative:
**Leson, Thomas Johannes Alois, Dipl.-Ing.**
**Tiedtke-Bühling-Kinne & Partner GbR,**
**TBK-Patent,**
**Bavariaring 4**
**80336 München (DE)**

(54) **An exhaust gas purifying apparatus and method of using the same**

(57) The present invention relates to an exhaust gas purifying apparatus comprising a plasma reactor containing a hydrogen-generating catalyst and a $NO_x$-purifying catalyst located downstream of said plasma reactor. Further, the present invention relates to an exhaust gas purifying apparatus comprising a plasma reactor containing a hydrogen-generating catalyst and a $NO_x$-purifying catalyst. Still further, the present invention relates to a method using the present apparatus. According to the present apparatus, by generating plasma in the plasma reactor, it is possible to enhance and/or maintain a NOx purifying ability of the NOx purifying catalyst, etc.

Fig.1

EP 1 479 430 A1

**Description**

Background of the Invention

Field of the Invention

The present invention relates to an apparatus for purifying exhaust gas emitted from an internal combustion engine and, in particular, to an apparatus for purifying $NO_x$ (nitrogen oxide) emitted from a motor vehicle.

Description of Related Art

In order to purify an exhaust gas emitted from an internal combustion engine such as a motor vehicle, it is usual to reduce $NO_x$ in the exhaust gas by the use of $NO_x$ purifying catalyst carrying a noble metal. In the use of a $NO_x$ storage reduction catalyst which is one of the $NO_x$ purifying catalysts, an internal engine is normally driven in lean condition to store $NO_x$ emitted from the engine at the $NO_x$ storage agent and, then, intermittently, the stored $NO_x$ is reduced into a $N_2$ by providing a rich spike, i.e. making the air/fuel rich.
It is proposed to generate $H_2$ having high reduction ability in order to promote reduction of $NO_x$ during the rich spike. For example, Japanese Unexamined Patent Publication No. 2001-300262 proposes to use a hydrogen-generating catalyst, which consists of a basic metal oxide carrier having platinum, upstream of the $NO_x$ storage reduction catalyst. The hydrogen-generating catalyst converts CO and $H_2O$ into $CO_2$ and $H_2$.
Japanese Unexamined Patent Publication No. 2001-224961 proposes to add a Pt / $TiO_2$ hydrogen-generating catalyst to a $NO_x$ storage reduction catalyst. The hydrogen-generating catalyst converts CO and $H_2O$ into $CO_2$ and $H_2$.
Japanese Unexamined Patent Publication No. 2001-159309 proposes that an electric discharge is provided upstream of, or on, a catalyst in the exhaust gas line of an internal combustion engine, and that a reducing content of HC (hydro carbon) is added upstream of the electric discharge. The added HC is decomposed or ionized by the electric discharge.
The exhaust gas purifying apparatuses of the JPP' 262 and JPP' 961 have partially achieved the object that a strong reducing agent of $H_2$ is generated by the use of hydrogen-generating catalyst. However, $H_2$ is not always generated in a required amount particularly when the hydrogen-generating catalyst has a lower temperature and the catalyst has a lower activity.
The exhaust gas purifying apparatus of the JPP' 309 does not realize the benefit of the hydrogen-generating catalyst.
Therefore, the present invention provides an improved exhaust gas purifying apparatus which can provide a sufficient amount of $H_2$.

Brief Summary of the Invention

An exhaust gas purifying apparatus of the present invention comprises a plasma reactor containing a hydrogen-generating catalyst, and a $NO_x$-purifying catalyst located downstream of said plasma reactor.
Another exhaust gas purifying apparatus of the present invention comprises a plasma reactor containing a hydrogen-generating catalyst and a $NO_x$-purifying catalyst. The $NO_x$-purifying catalyst in the reactor may be positioned downstream of the hydrogen-generating catalyst. Further, the $NO_x$-purifying catalyst may be mixed with the hydrogen-generating catalyst.
According to the present exhaust gas purifying apparatus, it is possible (a) to enhance and/or maintain a NOx purifying ability of the NOx purifying catalyst by the use of the strong reducing agent $H_2$, (b) to promote hydrogen generating reaction even at the lower temperature at which an hydrogen generating catalyst alone does not work well, (c) to increase $NO_x$ reducing ability by the use of the strong reducing agent $H_2$ without increasing the amount of noble metal to be used, and/or (d) to effectively use the reducing agents in an exhaust gas to reduce the amount of fuel required for a rich spike for $NO_x$ reduction, and then improve a fuel efficiency and an emission, etc.
Further, it is possible to provide plasma on both the hydrogen generating catalyst and the $NO_x$ purifying catalyst, and thereby promote the reactions catalyzed by these catalysts.
In one embodiment of the present apparatus, the hydrogen-generating catalyst is selected from the group consisting of a CO shift catalyst and a HC reforming catalyst, and combinations thereof.
The CO shift catalyst may be selected from the group consisting of $CuO_x$/ZnO type catalysts, Cu/$MnO_x$ type catalysts, Fe/$CrO_x$ type catalysts and Pt/$TiO_2$ type catalysts. The HC reforming catalyst may be selected from the group consisting of Rh/$ZrO_2$ type catalysts and Rh/$CeO_2$ type catalysts.
In another embodiment of the present apparatus, the $NO_x$-purifying catalyst is a $NO_x$ storage reduction catalyst, a $NO_x$ selective reduction catalyst or a three-way catalyst, and particularly a $NO_x$ storage reduction catalyst.

A method for using the exhaust gas purifying apparatus of the present invention wherein plasma is generated in the plasma reactor only when a rich gas, i.e. gas containing a larger amount of reducing agents than the theoretical air/fuel ratio gas, is passing through the plasma reactor and, particularly, the temperature of the hydrogen generating catalyst is lower than a predetermined temperature such as at the temperature of less than 400°C.

According to the method of the present invention, it is possible to obtain the benefit of the present apparatus, with less energy, by generating plasma only when a rich spike is provided (when rich gas is passing through the plasma reactor), i.e. when the strong reducing agent of $H_2$ is required, and the temperature of the exhaust gas is low.

These and other objects, features and advantages of the present invention will become apparent to a person with ordinary skilled in the art upon reading the following detailed description along with the drawings.

Brief Description of the Drawings

Fig. 1 is a block diagram of one embodiment of the present exhaust gas purifying apparatus.
Fig. 2 is a block diagram of another embodiment of the present exhaust gas purifying apparatus.
Figs. 3a and 3b are respectively a perspective view and a cross sectional view of one plasma reactor which can be used for the present exhaust gas purifying apparatus.
Figs. 4a and 4b are respectively a perspective view and a cross sectional view of another plasma reactor which can be used for the present exhaust gas purifying apparatus.

Detailed Description of the Invention

The present invention will be described using embodiments and drawings which are, however, not intended to limit the scope of the present invention shown in the claims.

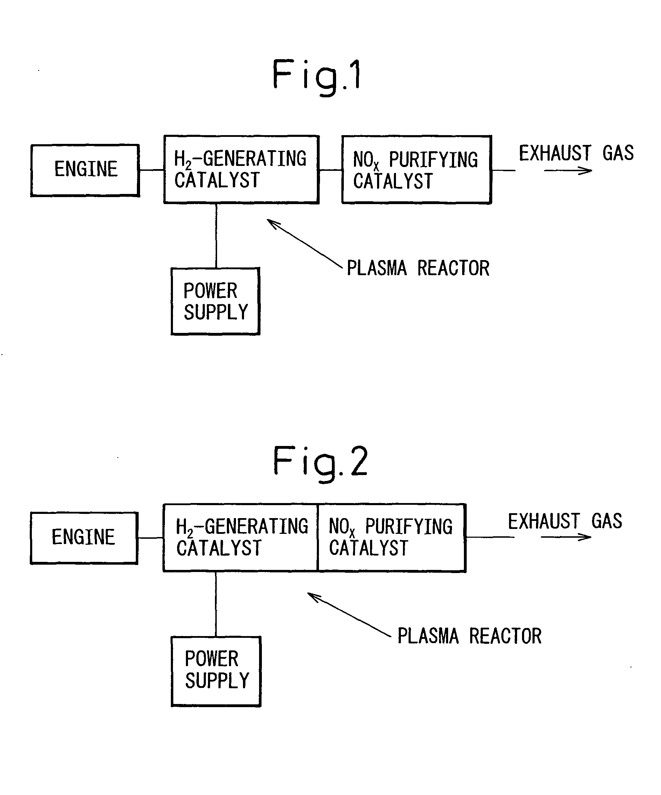

The first and second embodiments of the present exhaust gas purifying apparatuses are described in relation to Figs. 1 and 2, below.

In the use of the apparatus shown in Fig. 1, an exhaust gas emitted from an engine is passed through a plasma reactor containing a hydrogen-generating catalyst, and then a $NO_x$-purifying catalyst located downstream of the plasma reactor. In the use of the apparatus shown in Fig. 2, an exhaust gas emitted from an engine is passed through a hydrogen-generating catalyst and a $NO_x$-purifying catalyst in a plasma reactor. The plasma can be generated always or when needed in these plasma reactors.

The components of the exhaust gas purifying apparatus shown in Figs. 1 and 2 are described below in more detail.

The hydrogen generating catalyst used for the exhaust gas purifying apparatus of the present invention may be any catalyst which catalyzes generation of hydrogen in an exhaust gas emitted from an internal combustion engine. The hydrogen generating catalyst may be a CO shift catalyst such as $CuO_x$/ZnO type catalysts, $Cu/MnO_x$ type catalysts, $Fe/CrO_x$ type catalysts or $Pt/TiO_2$ type catalysts, and a HC reforming catalyst such as $Rh/ZrO_2$ type catalysts or $Rh/CeO_2$ type catalysts. Further, the hydrogen generating catalysts are described as a basic metal oxide carrier having platinum in JPP' 262 and titanium carrying platinum in JPP' 961.

The term "CO shift catalyst (or water gas shift catalyst)" used in relation to the present invention means the catalysts having catalytic effect on the following reaction (I). The term "HC reforming catalyst" used in relation to the present invention means the catalysts having catalytic effect on the following reaction (II).

$$CO + H_2O \rightarrow CO_2 + H_2 \tag{I}$$

$$HC + H_2O \rightarrow CO_2 + H_2 \tag{II}$$

The $NO_x$ purifying catalyst which is carried onto the $NO_x$-purifying catalyst and/or located downstream of the $NO_x$-purifying catalyst is any kind of catalyst which catalyzes reduction from $NO_x$ to $N_2$. The $NO_x$ purifying catalyst may be so-called a $NO_x$ storage reduction catalyst, a $NO_x$ selective reduction catalyst or a three-way catalyst.

The $NO_x$ storage reduction catalyst is a catalyst which stores $NO_x$ when air/fuel ratio is in lean, and reduces the stored $NO_x$ into $N_2$ when air/fuel ratio is in rich, i.e. when a rich spike is provided (when fuel is injected into an exhaust gas flow). For example, the $NO_x$ storage reduction catalyst is a catalyst wherein a porous metal oxide carrying one or more noble metal such as Pt, Rh, Pd, Ir and Ru, and one or more $NO_x$ storage elements such as alkali metals, alkali earth metals and rare earth metals.

The $NO_x$ selective reduction catalyst is a catalyst which selectively reduces or decomposes $NO_x$ in an exhaust gas. The $NO_x$ selective reduction catalyst is used for purifying $NO_x$ in the exhaust gas emitted from an internal combustion engine driven at a lean air/fuel ratio. For example, the $NO_x$ selective reduction catalyst is a zeolite exchanged with transition metal such as Cu, or zeolite or alumina carrying one or more noble metal.

The three-way catalyst is a catalyst which converts CO, HC and $NO_x$ in an exhaust gas emitted from an internal combustion engine driven at near theoretical air/fuel ratio into $CO_2$, $H_2O$ and $N_2$. For example, the three-way catalyst is an alumina carrying mixture of Pt and Rh, or mixture of Pd and Rh.

The catalyst metals such as noble metal and a transition metal can be carried onto any kind of substrate such as formed substrate or powder substrate by wash coating etc. Further, a formed substrate such as honeycomb substrate may be coated with the slurry comprising the particle carrying catalyst metals, and then dried and fired to obtain a formed substrate carrying catalyst. The particle carrying catalyst metals may be formed into pallet form and charged into a container.

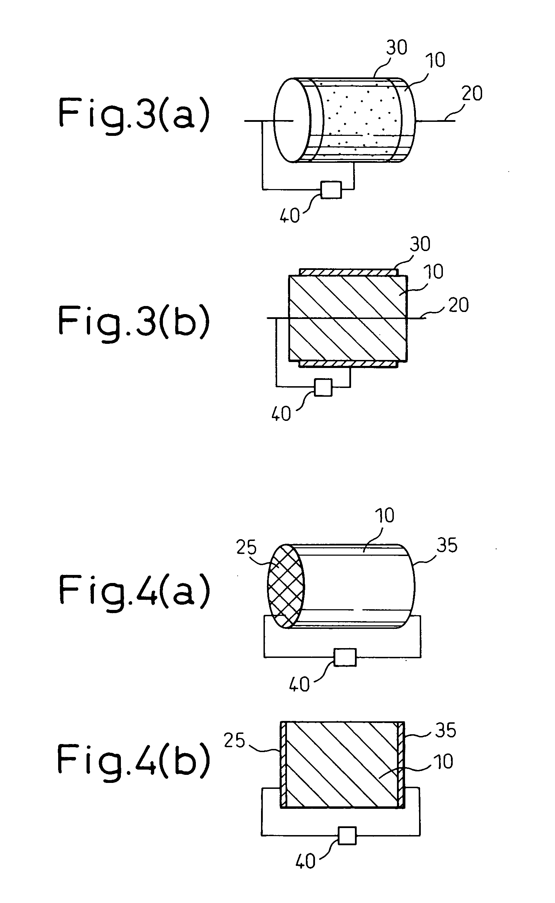

The plasma reactor used for the exhaust gas purifying apparatus of the present invention may be any kind of plasma reactor which allows the exhaust gas to pass therethrough, e.g. the plasma reactor shown in Figs. 3a and 3b. Fig. 3a shows a perspective view and Fig. 3b shows a side sectional view of the plasma reactor.

The plasma reactor can generate plasma by a discharge between a center electrode 20 and outer electrode 30, these electrodes 20 and 30 being connected to a power supply 40. The exhaust gas to be treated is passed through a cylindrical passage 10 surrounded by the outer electrode 30. The $H_2O$ and/or HC adsorbent, and optionally $NO_x$-purifying catalyst, may be positioned in the cylindrical passage 10.

The center electrode 20 is made of a material that makes it possible to apply a voltage between the center electrode 20 and the outer electrode 30. The material may be electrically conductive material, electrically semiconductive material etc. and especially, a metal such as Cu, W, stainless steel, Fe, PT and Al, the stainless steel being most preferable due to its durability and low cost. The center electrode 20 is usually a metal wire, but it may be a hollow bar.

The outer electrode 30 is made of a material that makes it possible to apply a voltage between the center electrode 20 and the outer electrode 30. The material may be the material described for the center electrode 20. The outer electrode 30 may be made by surrounding a mesh or foil of these materials around the cylindrical passage 10, or by applying a conductive paste on the circumference surface of the cylindrical passage 10.

The electric power supply 40 may be one supplying a pulse or constant direct current (DC), or alternating current (AC) voltage. A voltage applied between the center electrode 20 and the outer electrode 30 and the pulse period of the applied voltage may be 50 kV and 2000 Hz. The center electrode 20 may be a cathode or anode.

The electric power supply 40 may apply a high voltage between the center electrode 20 and outer electrode 30 in order to generate a discharge and then a plasma therebetween. The electric power supply 40 may apply a DC voltage, AC voltage, a voltage having a periodic waveform, and etc. between the electrodes. Preferably, DC pulse voltage is applied since it can generate a stable corona electric discharge. The applied voltage, pulse width and pulse period of the DC pulse voltage may be optionally determined as long as it generates a corona electric discharge. Preferably, the applied voltage and pulse period are respectively a high voltage and short period in order to generate a corona electric discharge, though those parameters may be restricted by the design of the apparatus, an economical interest etc.

The plasma reactor used for the exhaust gas purifying apparatus of the present invention may be the plasma reactor shown in Figs. 4a and 4b. Fig. 4a shows a perspective view and Fig. 4b shows a side sectional view of the plasma reactor.

The plasma reactor can generate plasma by discharging between mesh-like electrodes 25 and 35 which are at upstream and downstream of the cylindrical passage 10, these electrodes 25 and 35 being connected to a power supply 40. The exhaust gas to be treated is passed through an upstream mesh-like electrode 25, cylindrical passage 10 and then a downstream-like mesh electrode 35. The $H_2O$ and/or HC adsorbent, and optionally the $NO_x$-purifying catalyst, may be contained in the cylindrical passage 10. The description of the materials used for electrodes, the power supply, etc. of the plasma reactor of Figs. 3a and 3b may be referred for the plasma reactor of Figs. 4a and 4b.

The effects of the present invention are shown with regard to the examples, which are not intended to limit the scope of the present invention shown in the claims.

Example 1

A plasma reactor shown in Figs. 3a and 3b was used to determine the effect of a HC reforming catalyst and plasma on a rich spike storage amount of $NO_x$.

In this example, 2.0 g of HC reforming catalyst ($Rh/ZrO_2$) and 1.0 g of $NO_x$ storage reduction catalyst ( "NSR catalyst") ($Pt/Ba/\gamma-Al_2O_3$) downstream of the HC reforming catalyst was contained in the plasma reactor. The HC reforming catalyst contains about 2 wt%.of Rh, and the NSR catalyst contains 2g of Pt and 0.2 mol of Ba on the basis of the 270 g of $\gamma$-Al$_2$O$_3$.

The plasma reactor was located in the reaction tube of an laboratory model-gas analyzer, and the catalyst temperature was maintained at 150°C. A lean gas comprising 1000 ppm of NO, 10 % of O$_2$, 3.0 % of H$_2$O and balance N$_2$ (Air/Fuel ratio = 21) was passed through the plasma reactor for 100 seconds to store NO$_x$ in the NSR catalyst, and then a rich gas comprising 3000 ppm of C$_3$H$_8$, 1000 ppm of NO, 3.0 % of H$_2$O and balance N$_2$) is passed through the plasma reactor for 5 seconds. In this example, DC pulse voltage (50 kV, 2000 Hz) is applied to the plasma reactor to generate plasma only while the rich gas is passed through it. After repeating the cycle of the lean and rich gases, NO$_x$ storage amount, i.e. an amount of NO$_x$ which can be stored while the lean gas is provided after providing the rich gas, is determined.

Comparative example 1

The example 1 was repeated except that the plasma was not generated.

Comparative example 2

The example 1 was repeated except that the HC reforming catalyst was not contained in the plasma reactor.

Comparative example 3

The example 1 was repeated except that the plasma was not generated and the HC reforming catalyst was not contained in the plasma reactor.

The results obtained in example 1 and comparative examples 1 to 3 are shown in the following table 1.

Table 1

|  | No$_x$ storage amount (mg) | |
|---|---|---|
|  | no plasma | plasma |
| NSR catalyst | 0.12 | 0.79 |
| HC catalyst + NSR catalyst | 0.33 | 8.66 |

As seen from the table 1, the example 1 according to the present invention (plasma + HC reforming catalyst + NO$_x$ purifying) provides a much better performance than comparative example 1 (HC reforming catalyst only + NO$_x$ purifying), comparative example 2 (plasma + NO$_x$ purifying) and comparative example 3 (NO$_x$ purifying catalyst).

Example 2

A plasma reactor shown in Figs. 3a and 3b was used to determine the effect of a CO shift catalyst and plasma on a conversion from NO to NO$_2$.

In this example, 2.0 g of CO shift catalyst (Pt/TiO$_2$) and 1.0 g of NSR catalyst (Pt/Ba/$\gamma$-Al$_2$O$_3$) downstream of the CO shift catalyst was contained in the plasma reactor. The CO shift catalyst contains about 2 wt% of Pt, and the NSR catalyst contains 2g of Pt and 0.2 mol of Ba on the basis of the 270 g of $\gamma$-Al$_2$O$_3$.

The plasma reactor was tested by repeating the procedure of example 1 except that the catalyst temperature was maintained at 200°C and that the rich gas comprising 1 % of CO, 1000 ppm of NO, 3.0 % of H$_2$O and balance N$_2$.

Comparative example 4

The example 2 was repeated except that the plasma was not generated.

Comparative example 5

The example 2 was repeated except that the CO shift catalyst was not contained in the plasma reactor.

Comparative example 6

The example 2 was repeated except that the plasma was not generated and the CO shift catalyst was not contained in the plasma reactor.

The results obtained in example 2 and comparative examples 4 to 6 are shown in the following table 2.

Table 2

| | NO$_x$ storage amount (mg) | |
|---|---|---|
| | no plasma | plasma |
| NSR catalyst | 0.2 | 1.54 |
| CO catalyst + NSR catalyst | 0.57 | 13.6 |

As seen from the table 2, the example 1 according to the present invention (plasma + CO shift catalyst + NO$_x$ purifying catalyst) provides a much better performance than comparative example 4 (CO shift catalyst only + NO$_x$ purifying catalyst), comparative example 5 (plasma + NO$_x$ purifying catalyst) and comparative example 6 (NO$_x$ purifying catalyst).

Although the present invention has been fully described by way of the example with reference to the accompanying drawings, it should be understood that various changes and modifications would be apparent to those skilled in the art. Therefore, such changes and modifications can be made within the scope of the present invention hereinafter defined.

The present invention relates to an exhaust gas purifying apparatus comprising a plasma reactor containing a hydrogen-generating catalyst and a NO$_x$-purifying catalyst located downstream of said plasma reactor. Further, the present invention relates to an exhaust gas purifying apparatus comprising a plasma reactor containing a hydrogen-generating catalyst and a NO$_x$-purifying catalyst. Still further, the present invention relates to a method using the present apparatus. According to the present apparatus, by generating plasma in the plasma reactor, it is possible to enhance and/or maintain a NOx purifying ability of the NOx purifying catalyst, etc.

## Claims

1. An exhaust gas purifying apparatus comprising;
   a plasma reactor containing a hydrogen-generating catalyst, and
   a NO$_x$-purifying catalyst located downstream of said plasma reactor.

2. The exhaust gas purifying apparatus according to claim 1 wherein said a hydrogen-generating catalyst is selected from the group consisting of a CO shift catalyst and a HC reforming catalyst, and combinations thereof.

3. The exhaust gas purifying apparatus according to claim 2 wherein said a CO shift catalyst is selected from the group consisting of CuO$_x$/ZnO type catalysts, Cu/MnO$_x$ type catalysts, Fe/CrO$_x$ type catalysts and Pt/TiO$_2$ type catalysts, and combinations thereof.

4. The exhaust gas purifying apparatus according to claim 2 wherein said a HC reforming catalyst is selected from the group consisting of Rh/ZrO$_2$ type catalysts and Rh/CeO$_2$ type catalysts, and combinations thereof.

5. The exhaust gas purifying apparatus according to claim 1 wherein said NO$_x$-purifying catalyst is a NO$_x$ storage reduction catalyst, a NO$_x$ selective reduction catalyst or a three-way catalyst.

6. The exhaust gas purifying apparatus according to claim 5 wherein said NO$_x$-purifying catalyst is a NO$_x$ storage reduction catalyst.

7. A method for using the exhaust gas purifying apparatus according to claim 1 wherein plasma is generated in the plasma reactor only when a rich gas is passing through the said plasma reactor.

8. An exhaust gas purifying apparatus comprising;
   a plasma reactor containing a hydrogen-generating catalyst and a NO$_x$-purifying catalyst.

9. The exhaust gas purifying apparatus according to claim 8 wherein said a hydrogen-generating catalyst is selected from the group consisting of a CO shift catalyst and a HC reforming catalyst, and combinations thereof.

10. The exhaust gas purifying apparatus according to claim 8 wherein said NO$_x$-purifying catalyst is a NO$_x$ storage

reduction catalyst, a $NO_x$ selective reduction catalyst or a three-way catalyst.

11. A method for using the exhaust gas purifying apparatus according to claim 8 wherein plasma is generated in the plasma reactor only when a rich gas is passing through the said plasma reactor.

# Fig.1

```
┌──────────┐   ┌─────────────┐        ┌─────────────┐    EXHAUST GAS
│  ENGINE  │──▶│ H₂-GENERATING│───────▶│ NOₓ PURIFYING│───────────────▶
└──────────┘   │  CATALYST   │        │  CATALYST   │
               └──────┬──────┘        └─────────────┘
                      │          ↖ PLASMA REACTOR
               ┌──────┴──────┐
               │   POWER     │
               │   SUPPLY    │
               └─────────────┘
```

# Fig.2

```
┌──────────┐   ┌─────────────┬─────────────┐   EXHAUST GAS
│  ENGINE  │──▶│ H₂-GENERATING│ NOₓ PURIFYING│──────────────▶
└──────────┘   │  CATALYST   │  CATALYST   │
               └──────┬──────┴─────────────┘
                      │      ↖ PLASMA REACTOR
               ┌──────┴──────┐
               │   POWER     │
               │   SUPPLY    │
               └─────────────┘
```

Fig.3(a)

Fig.3(b)

Fig.4(a)

Fig.4(b)

**European Patent Office**

**EUROPEAN SEARCH REPORT**

Application Number

EP 04 01 1989

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br>A | US 2002/194835 A1 (LESLIE BROMBERG ET AL.)<br>26 December 2002 (2002-12-26)<br>* paragraph '0014! *<br>* paragraph '0016! - paragraph '0017! *<br>* paragraph '0020! *<br>* paragraph '0023! - paragraph '0024! * | 1,5-8,<br>10,11<br>2-4,9 | B01D53/94<br>F01N3/20 |
| P,X | US 6 655 130 B1 (JOHN E. KIRWAN)<br>2 December 2003 (2003-12-02)<br>* column 3, line 27 - column 5, line 46 * | 1,2,5-11 | |
| P,X | EP 1 365 119 A (ENGELHARD CORPORATION)<br>26 November 2003 (2003-11-26)<br>* paragraph '0034! - paragraph '0068!;<br>figures * | 1,8 | |
| P,X | WO 03/091551 A (ARVIN TECHNOLOGIES)<br>6 November 2003 (2003-11-06)<br>* claims; figures 2-5 * | 1,8 | TECHNICAL FIELDS SEARCHED (Int.Cl.7)<br><br>B01D<br>F01N |

The present search report has been drawn up for all claims

| Place of search | Date of completion of the search | Examiner |
|---|---|---|
| The Hague | 3 August 2004 | Bogaerts, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                EP 04 01 1989

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2004

| Patent document cited in search report | | Publication date | Patent family member(s) | | Publication date |
|---|---|---|---|---|---|
| US 2002194835 | A1 | 26-12-2002 | US<br>CA<br>EP<br>JP<br>WO | 6560958 B1<br>2383551 A1<br>1212520 A1<br>2003529012 T<br>0114698 A1 | 13-05-2003<br>01-03-2001<br>12-06-2002<br>30-09-2003<br>01-03-2001 |
| US 6655130 | B1 | 02-12-2003 | US | 2003163988 A1 | 04-09-2003 |
| EP 1365119 | A | 26-11-2003 | US<br>EP<br>AT<br>AU<br>DE<br>DE<br>EP<br>WO<br>US | 6176078 B1<br>1365119 A2<br>249576 T<br>1342000 A<br>69911242 D1<br>69911242 T2<br>1135580 A1<br>0029727 A1<br>6363716 B1 | 23-01-2001<br>26-11-2003<br>15-09-2003<br>05-06-2000<br>16-10-2003<br>08-07-2004<br>26-09-2001<br>25-05-2000<br>02-04-2002 |
| WO 03091551 | A | 06-11-2003 | WO<br>US | 03091551 A1<br>2003200742 A1 | 06-11-2003<br>30-10-2003 |

EPO FORM P0459

For more details about this annex : see Official Journal of the European Patent Office, No. 12/82